# FASCICULE DE BREVET EUROPEEN

(11) **EP 0 638 652 B1**
(45) Date de publication et mention de la délivrance du brevet: **29.03.2000**
(21) Numéro de dépôt: 94401837.3
(22) Date de dépôt: 10.08.1994
(51) Int. Cl.: C21D 7/06, C22F 1/10, B22F 3/24, C25D 5/48

(54) **Procédé de durcissement de pieces metalliques**
Verfahren zum Härten von metallischen Gegenstanden
Process for hardening metal workpieces

(30) Priorité: 12.08.1993 FR 9309894
(43) Date de publication de la demande: 15.02.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Barreau, Eric Lucien Pierre, F-27400 Louviers (FR); Honnorat, Yves Christian Louis Alain, F-91400 Gometz la Ville (FR); Martinou, Robert Lucien, F-94360 Bry sur Marne (FR); Richin, Catherine Marie Hélène, F-91410 Roinville sous Dourdan (FR)

(56) Documents cités:
- EP-A- 0 074 918
- EP-A- 0 492 323
- US-A- 3 625 039
- US-A- 3 787 191
- PATENT ABSTRACTS OF JAPAN vol. 17, no. 463 (E-1420) 24 Août 1993 & JP-A-05 109 523 (MITSUBISHI MATERIALS CORPORATION) 30 Avril 1993
- POWDER METALLURGY, vol.34, no.4, 1991, LONDON GB pages 253 - 258 T. BELL 'Surface treatment and coating of PM components.'
- MECANIQUE, no.350, Février 1979, PARIS FR pages 101 - 105 C. DIEPART 'Exemples d applications du grenaillage de précontrainte'

## Description

L'invention se rapporte à un procédé de durcissement de pièces métalliques.

Il existe plusieurs techniques pour accroître la dureté superficielle de pièces métalliques : on peut déposer sur la pièce une couche de métal plus dur que le métal qui la constitue par exemple sous forme de plasma, ou écrouir la surface de la pièce par un grenaillage qui introduit des contraintes superficielles de compression. Dans le cas du grenaillage, des débris de projectiles sont souvent incrustés à la surface de la pièce et y forment des entailles dont le fond est souvent aigu et constitue une amorce de rupture par fatigue de la pièce, qui peut altérer le bénéfice du durcissement superficiel obtenu.

Diverses applications du grenaillage sont décrites par US.A.3787.191, US.A.3625.039 et la publication mécanique N° 350 aux pages 101-105 intitulée "Exemples d'application du grenaillage de précontrainte" par C. DIEPART. Ces applications donnent des exemples de cas particuliers associant grenaillage et dépôt d'un revêtement électrolytique.

En outre, la publication Powder Metallurgy vol. 34 N° 4, 1991 aux pages 253-258 intitulée "surface treatment and coating of PM components" par T. BELL indique les conditions générales de traitement de surface de pièces obtenues par métallurgie des poudres.

L'invention est relative à une amélioration du procédé de grenaillage de précontrainte ayant pour but d'accomplir le durcissement sans blesser la surface de la pièce. L'invention est définie dans la revendication 1. Le moyen retenu consiste en un dépôt intermédiaire métallique, avant le grenaillage, par voie électrolytique sur le métal de base. Le revêtement a pour seule utilité d'être interposé entre la pièce à durcir et les projectiles de grenaillage et de transmettre les précontraintes de durcissement, mais pas les dommages superficiels. Il ne joue aucun rôle dans la résistance mécanique de la pièce et peut d'ailleurs être ôté après le grenaillage. Le procédé de l'invention doit être distingué d'autres procédés de grenaillage dont le but est de durcir le revêtement plutôt que la pièce de substrat. Une différence fondamentale est que le revêtement est alors beaucoup plus épais, de l'ordre de quelques centaines de micromètres au lieu de quelques dizaines dans l'invention, ce qui ne permet pas aux précontraintes de pénétrer dans le substrat.

L'invention va maintenant être décrite à titre illustratif et non limitatif à l'aide de la figure suivante qui illustre une réalisation de l'invention :
- la figure unique représente une coupe à travers un échantillon de pièce grenaillée.

Les essais sur grenaillage ont été menés avec des pièces se présentant sous forme de blocs d'Astroloy qui est un alliage de nickel à 17% ou 18% de cobalt obtenu en métallurgie des poudres. Les revêtements déposés sur ce substrat ont consisté en du nickel de dureté de 250 à 280 HV et de nickel-cobalt de dureté de 400 HV. Il a été trouvé que des épaisseurs déposées trop faibles ne conduisaient pas à des résultats satisfaisants car le dépôt était alors partiellement arraché ou traversé par les projectiles de grenaillage.

Le dépôt est fait grâce à un bain de sulfamate de nickel donnant des contraintes résiduelles peu élevées jusqu'à l'obtention d'une sous-couche d'épaisseur comprise entre 0,020 et 0,1 mm. On procède aux précautions traditionnelles en pareil cas : c'est ainsi que les blocs doivent être dégraissés, décapés et activés au préalable.

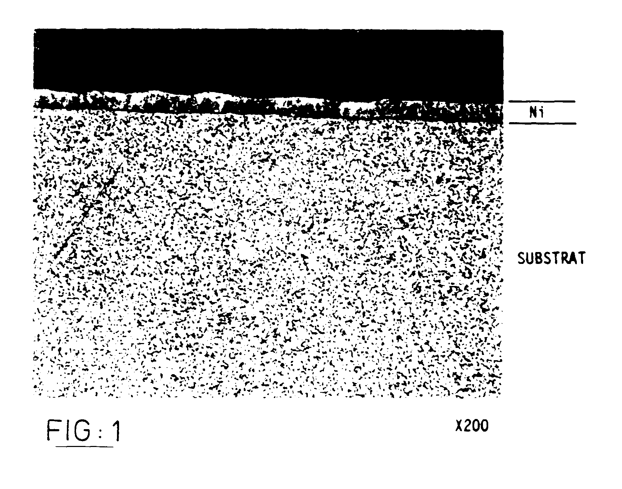

On a constaté que des épaisseurs de 12 à 25 micromètres de nickel ou d'alliage de nickel étaient suffisantes pour assurer la cohésion du dépôt, sans perte d'adhérence au métal de base de la pièce. La figure 1 représente l'aspect obtenu après un grenaillage ordinaire : les traces des projectiles sont bien visibles sur le dépôt mais aucune détérioration n'existe sur la surface du métal de base, qui est cependant soumis à des contraintes résiduelles de compression comme on le souhaite. La zone contrainte est un peu moins profonde que pour un grenaillage effectué sans dépôt de nickel (140 micromètres au lieu de 180 environ) mais la contrainte obtenue est aussi élevée voire davantage (1250 MPa au lieu de 1100 environ).

Il est possible d'ôter ensuite le revêtement, par exemple par une attaque chimique telle que par l'acide nitrique pour un revêtement de nickel ou d'alliage de nickel ou en fonction des alliages par un procédé de dissolution connu.

Il est possible toutefois d'utiliser des conditions plus sévères de grenaillage de précontrainte conduisant à l'obtention de profondeur écrouie d'au moins 200 microns. Dans ce cas, l'épaisseur du revêtement pourra être légèrement plus grande que celle qui est compatible avec un grenaillage ordinaire. La limite d'épaisseur est fonction de deux exigences : conservation de l'adhérence de la couche déposée lors de l'impact des projectiles, mise sous contrainte résiduelle élevée de compression du substrat. Avantageusement, l'épaisseur de la couche de protection est comprise entre 0,012 mm et 0,025 mm.

On a pu constater que l'adhérence du dépôt au métal ou à l'alliage constituant le substrat de la pièce était nécessaire pour assurer une bonne qualité du traitement subséquent de grenaillage, et qu'elle n'était pas toujours assurée en pratique. C'est pourquoi le dépôt par voie électrolytique, qui permet une liaison plus intime du dépôt au substrat, est envisagé pour cette invention. Le revêtement électrolytique permet en outre d'éviter toute incrustation de matière dans le substrat préjudiciable à la durée de vie des pièces. On estime encore qu'il est souvent préférable de choisir comme métal de base du revêtement le métal de base de l'alliage constituant le substrat, ou le métal unique du substrat, pour aider à la liaison au substrat. Cela explique qu'on a examiné d'abord des revêtements nickelés, avec l'intention de les utiliser pour des pièces de turbomachines de moteurs d'avion construites en super-alliages à base de nickel. Ces pièces sont souvent fabriquées par le pressage et le frittage de l'alliage en poudre et versé dans des gaines de moulage.

## Revendications

1. Procédé de durcissement par grenaillage d'une pièce métallique obtenue par pressage et frittage d'une poudre en alliage à base de nickel, consistant à faire précéder le grenaillage par un dépôt par voie électrolytique d'une couche métallique de protection en nickel ou en alliage de nickel et cobalt, la couche de protection étant d'épaisseur choisie pour éviter d'endommager la pièce et de réduire sensiblement une valeur de précontrainte de compression donnée à la pièce, ladite épaisseur étant comprise entre 0,012 mm et 0,025 mm.

2. Procédé suivant la revendication 1, caractérisé en ce que la couche de protection est ôtée après le grenaillage.

## Patentansprüche

1. Verfahren zum Kugelstrahlharten eines durch Pressen und Sintern eines Pulvers aus einer Legierung auf Nickelbasis gewonnenen metallischen Werkstücks,
wobei man dem Kugelstrahlen eine elektrolytische Ablagerung einer metallischen Schutzschicht aus Nickel oder einer Nickel- und Kobaltlegierung vorangehen laßt, wobei die Dicke der Schutzschicht so gewählt ist, daß eine Beschädigung des Werkstücks verhindert und der Wert der dem Werkstück verliehenen Kompressionsvorspannung spürbar reduziert wird, und wobei diese Dicke zwischen 0,012 mm und 0,025 mm liegt.

2. Verfahren nach Anspruch 1, dadurch gekennzeichnet, daß die Schutzschicht nach dem Kugelstrahlen entfernt wird.

## Claims

1. Process for hardening a metal workpiece by shot peening, the workpiece being obtained by pressing and sintering a powder made of a nickel-based alloy, which process consists, before the shot peening, in electrolytically depositing a protective metal layer made of a nickel or nickel-cobalt alloy, the protective layer being of a thickness chosen so as to avoid damaging the workpiece and substantially reducing the amount of compressive prestress given to the workpiece, the said thickness being between 0.012 mm and 0.025 mm.

2. Process according to Claim 1, characterized in that the protective layer is removed after the shot peening.
